# EUROPÄISCHE PATENTSCHRIFT

(11) **EP 1 940 644 B1**
(45) Veröffentlichungstag und Bekanntmachung des Hinweises auf die Patenterteilung: **14.04.2010**
(21) Anmeldenummer: 06807011.9
(22) Anmeldetag: 05.10.2006
(51) Int. Cl.: B60K 31/00, B60W 10/20, B60W 30/12, B62D 1/28

(54) **FAHRERASSISTENZSYSTEM**
DRIVER ASSISTANCE SYSTEM
SYSTEME D'AIDE A LA CONDUITE

(30) Priorität: 07.10.2005 DE 102005048014
(43) Veröffentlichungstag der Anmeldung: 09.07.2008
(73) Patentinhaber: ROBERT BOSCH GMBH, 70442 Stuttgart (DE)
(72) Erfinder: MAASS, Alexander, 71229 Leonberg (DE)
(86) Internationale Anmeldenummer: PCT/EP2006/067103
(87) Internationale Veröffentlichungsnummer: WO 2007/042462

(56) Entgegenhaltungen:
- US-A- 5 765 116
- US-B1- 6 282 478

## Beschreibung

### Stand der Technik

Die Erfindung betrifft ein Fahrerassistenzsystem nach dem Oberbegriff des Anspruchs 1.

Aus DE 101 14 470 ist ein Spurwechselassistent bekannt. Als Sensoreinrichtung ist ein Videosystem vorgesehen, mit dem die Fahrspurmarkierungen auf der Fahrbahn und damit die Querposition des eigenen Fahrzeugs relativ zu der aktuell befahrenen Fahrspur erkannt werden können. Wenn die Querposition des Fahrzeugs um mehr als eine bestimmte Toleranzgrenze zu der einen oder anderen Seite von der Spurmitte abweicht, erfolgt automatisch ein Regeleingriff in die Lenkung, um das Fahrzeug wieder annähernd auf die Spurmitte zurückzuführen. Hierdurch wird der Fahrkomfort für den Fahrer erheblich gesteigert und auch die Verkehrssicherheit erhöht, da der Fahrer sich ganz auf das Verkehrsgeschehen konzentrieren kann. Wenn der Fahrer jedoch absichtlich einen Spurwechsel vornehmen will, etwa um einen Überholvorgang einzuleiten, muss er bei aktiver Spurhaltefunktion größere Kräfte auf das Lenkrad ausüben, um die durch den Regeleingriff des Spurhalteassistenten verursachten Kräfte zu überwinden. Aus dem Grund ist bei dem bekannten System vorgesehen, dass die Spurhaltefunktion zumindest zeitweise deaktiviert wird, wenn eine Spurwechselabsicht des Fahrers erkannt wird, beispielsweise anhand der Betätigung des Fahrtrichtungsanzeigers.

Aus DE 102 005 024382.7 ist weiterhin ein Spurhalteassistent für Kraftfahrzeuge bekannt, mit einer Sensoreinrichtung zur Erkennung der Fahrspuren auf der Fahrbahn, mit einer Steuereinrichtung, die über ein Stellglied eine Kraft auf die Lenkung des Fahrzeugs ausübt, um das Fahrzeug in der Spur zu halten, und mit einer Einrichtung zur Erkennung der Spurwechselabsicht des Fahrers. Dabei ist die Steuereinrichtung derart ausgebildet, dass bei erkannter Spurwechselabsicht die auf die Lenkung ausgeübte Kraft asymmetrisch im Sinne eines leichteren Spurwechsels modifizierbar ist Weiterhin ist bei erkannter Spurwechselabsicht von der eigenen auf eine Zielspur der Betrag der auf die Lenkung des Fahrzeugs ausgeübten Kraft so von der Abweichung des Fahrzeugs von einer Solltrajektorie abhängig, dass die Kraft für Querpositionen zwischen der Solltrajektorie auf der eigenen Spur und der Solltrajektorie auf der Zielspur verringert oder gleich Null ist, jenseits der Solltrajektorie der Zielspur jedoch wieder zunimmt.

Aus der gattungsbildenden US 5,765,116 A ist ein Fahrerassistenzsystem bekannt, weiches mittels einer auf dem Fahrzeug montierten Videokamera eine Erkennung von Spurmarkierungen durchführt und die Position des Fahrzeugs im Bezug zu dieser Spurmarkierung durchführt. Ein Fahrer wird nun dabei unterstützt, seine Spur zu halten, indem ein Lenkmoment aufgebracht wird, das derart ausgeprägt ist, dass es das Fahren in einer Rinne simuliert, das heißt wenn das Fahrzeug in eine Schräglage auf einer Seite der Rinne käme, so würde automatisch eine Kraft wirken, bis das Fahrzeug sich wieder in der Mitte befindet.

### Vorteile der Erfindung

Die Erfindung mit den in Anspruch 1 angegebenen Merkmalen bietet den Vorteil, dass der Komfort und die Sicherheit eines Fahrerassistenzsystems mit Spurhaltfunktion weiter verbessert werden. Bei den bisher bekannten Fahrerassistenzsystemen wird nämlich nicht berücksichtigt, dass bei kurviger Fahrbahn unterschiedliche Lenkkräfte auftreten, wenn das Fahrzeug sich entlang der Innenkurve oder näher an der Außenkurve einer Fahrspur fortbewegt. So muss der Fahrer bei schneller Fahrt nahe der kurveninneren Spurmarkierung eine erhöhte Kraft auf das Lenkrad aufbringen, da er die Rückstellkraft der Lenkung sowie zusätzlich die künstlich erzeugte Kraft des Spurhaltesystems überbrücken muss. Die Erfindung stellt sicher, dass eine sportliche Fahrweise entlang der kurveninneren Spurmarkierung durch das Fahrerassistenzsystem nicht erschwert wird. Weiterhin wird dafür gesorgt, dass der Fahrer bei Fahrt entlang der Außenkurve in sanft verlaufenden Kurven nahezu keine zusätzliche Kraft auf das Lenkrad ausüben muss.

### Zeichnung

Ausführungsbeispiele der Erfindung sind in der Zeichnung dargestellt und werden in der nachfolgenden Beschreibung näher erläutert. Es zeigen:
- Figur 1: einen Verkehrsraum mit einem Fahrzeug in Fahrt auf einer geraden Strecke, nahe der linken Spurmarkierung
- Figur 2: einen Verkehrsraum mit einem Fahrzeug in Kurvenfahrt, nahe der kurvenäußeren Markierung
- Figur 3: einen Verkehrsraum mit einem Fahrzeug in schneller Kurvenfahrt, nahe der kurvenäußeren Markierung
- Figur 4: einen Verkehrsraum mit einem Fahrzeugin Fahrt auf gerader Strecke, nahe der rechten Spurmarkierung
- Figur 5: einen Verkehrsraum mit einem Fahrzeug in Kurvenfahrt, nahe der kurveninneren Markierung
- Figur 6: einen Verkehrsraum mit einem Fahrzeug in schneller Kurvenfahrt, nahe der kurveninneren Markierung
- Figur 7: ein Blockschaltbild mit wesentlichen Komponenten eines Fahrerassistenzsystems,
- Figur 8: ein Blockschaltbild mit wesentlichen Komponenten eines Fahrerassistenzsystems.

### Beschreibung der Ausführungsbeispiele

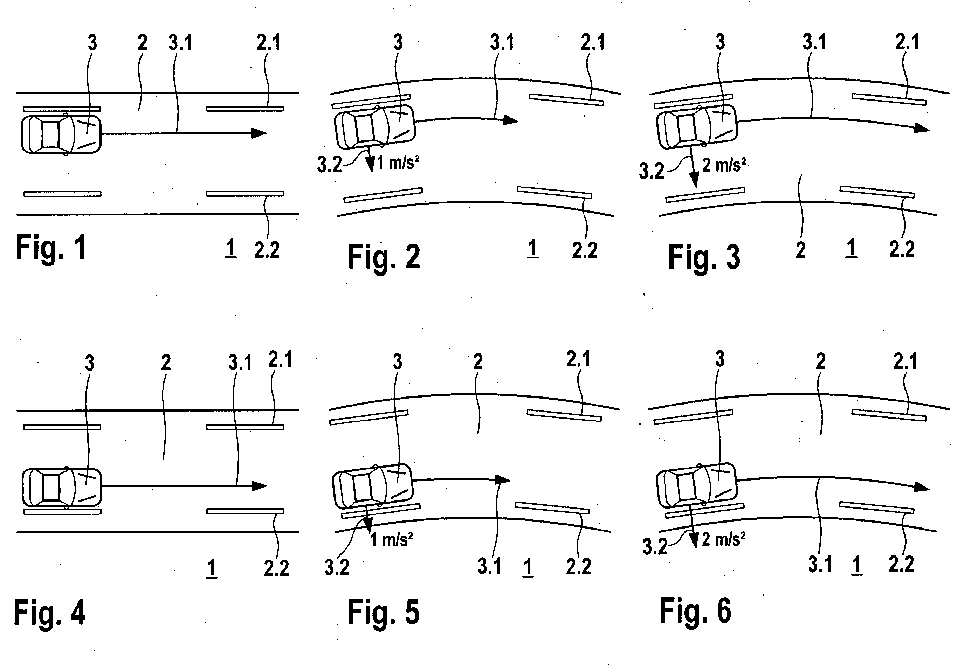

Die Unterstützung durch ein Fahrerassistenzsystem mit Spurführungsfunktion wird bei Kurvenfahrt dadurch bewirkt, dass bei Annäherung an eine Spurmarkierung ein in Richtung Spureinhaltung wirkendes Drehmoment auf die Lenksäule aufgebracht wird. Üblicherweise wird dieses Drehmoment durch einen entsprechend gesteuerten Elektromotor aufgebracht. Dieser Lenkeingriff sorgt dafür, dass sich das Fahrzeug wieder von der die Fahrspur begrenzenden Spurmarkierung entfernt. Nun ist bei sehr schnell gefahrenen und/oder engen Kurven ein stärkerer Eingriff nötig, um das Fahrzeug von einem Abkommen in Richtung Außenseite der Kurve bzw. Fahrspur abzuhalten. Dagegen ist bei solcher Kurvenfahrt ein unerwünschtes Abkommen in Richtung der Innenseite bzw. der entsprechenden Fahrspurmarkierung nur sehr schwer möglich, da die Auslegung der Lenkung infolge ihrer immanenten Rückstellkraft das Fahrzeug bereits in Richtung eines gerade verlaufenden Kurses drückt. Folglich kann das Fahrerassistenzsystem bei einer Annäherung an eine Außenkurve umso stärker in die Lenkung eingreifen, je enger die Kurve ist oder je schneller die Kurve durchfahren wird. Andererseits kann das Fahrerassistenzsystem bei einer Annäherung an die kurveninnere Fahrspurmarkierung umso schwächer eingreifen, je schneller das Fahrzeug fährt oder je enger die durchfahrene Kurve ist. Als Entscheidungskriterium wird vorteilhaft die Querbeschleunigung des Fahrzeugs herangezogen. Diese kann, im üblichen Fahrbetrieb, beispielsweise zwischen etwa 0 m/sec² und etwa 4 m/sec² liegen. Vorteilhaft wird ein Schwellwert der Querbeschleunigung festgelegt. Unterhalb und oberhalb dieses Schwellwerts sind die Einwirkungen auf das Lenksystem mehr oder weniger stark. Ausführungsbeispiele der Erfindung werden im Folgenden noch weiter unter Bezug auf die Zeichnung näher erläutert. In allen Figuren ist mit Bezugsziffer 1 ein nur teilweise dargestellter Verkehrsraum bezeichnet, in dem sich ein mit einem Fahrerassistenzsystem ausgestattetes Fahrzeug 3 fortbewegt. Die Fortbewegungsrichtung des Fahrzeugs 3 ist durch einen Pfeil 3.1 angedeutet. Die Länge des Pfeils deutet die Höhe der gefahrenen Geschwindigkeit an. In Figur 1 befährt das Fahrzeug 3 eine durch Fahrspurmarkierungen 2.1, 2.2 begrenzte Fahrspur 2 auf einer im Wesentlichen kurvenfreien Strecke des Verkehrsraums 1. Die Position des Fahrzeugs 3 ist nahe an der "äußeren" Fahrspurmarkierung 2.1. Bei diesem geraden Verlauf der Fahrspur 2 ist ein nur schwacher Eingriff des Fahrerassistenzsystems erforderlich, um das Fahrzeug 3 sicher in der Spur zu halten. Figur 2 zeigt das Fahrzeug 3 bei einer Kurvenfahrt auf einem kurvigen Teil der Fahrspur 2. Das Fahrzeug 3 bewegt sich dabei an dem Außenrand der Kurve entlang der äußeren Fahrspurmarkierung 2.1. Dabei ist das Fahrzeug etwa einer Querbeschleunigung von 1/msec² unterworfen. Richtung und Größe der Querbeschleunigung sind durch den Pfeil 3.2 angedeutet. Um das Fahrzeug 3 sicher in der Spur halten zu können, ist bei dieser Fahrsituation etwa ein mittelstarker Eingriff durch das Fahrerassistenzsystem in die Lenkung des Fahrzeugs 3 erforderlich. Figur 3 zeigt eine Fahrsituation, bei der sich das Fahrzeug 3 in einer vergleichbaren Kurve wie in Figur 2 dargestellt aber mit wesentlich höherer Geschwindigkeit fortbewegt. Dies führt zu einer noch höheren Querbeschleunigung mit einem Wert von etwa 2m/sec². Bei dieser Fahrsituation ist ein vergleichsweise starker Eingriff des Fahrerassistenzsystems in die Lenkung erforderlich, um das Fahrzeug 3 sicher in der Fahrspur 2 zu halten.

Bei den im Folgenden beschriebenen Fahrsituationen bewegt sich das Fahrzeug 3 jeweils am inneren Rand der Kurve, also entlang der Fahrspurmarkierung 2.2. In Figur 4 befährt das Fahrzeug 3 eine im Wesentlichen gerade Strecke in dem rechten Randbereich der Fahrspur 2. Bei einer drohenden Abweichung von der Fahrspur 2 ist seitens des Fahrerassistenzsystems wiederum, wie bei der in Figur 1 dargestellten Fahrsituation, nur ein geringer Lenkeingriff erforderlich, um das Fahrzeug 3 auf der Fahrspur 2 zu halten. Bei der in Figur 5 verdeutlichten Fahrsituation befährt das Fahrzeug 3 ein kurviges Streckenstück nahe der rechten Fahrspurmarkierung 2.2 der Fahrspur 2, also am inneren Kurvenrand. Die Querbeschleunigung des Fahrzeugs 3 beträgt dabei etwa 1/msec². Bei dieser Fahrsituation reicht ein vergleichsweise schwacher Lenkeingriff des Fahrerassistenzsystems aus, um das Fahrzeug 3 sicher in der Spur zu halten. Bei der in Figur 6 dargestellten Fahrsituation schließlich befährt das Fahrzeug 3 die Kurve mit einer höheren Geschwindigkeit, was sich auch in der größeren Querbeschleunigung von etwa 2m/sec² bemerkbar macht. Bei dieser Fahrsituation ist kein Eingriff in die Lenkung vorzusehen, da das Fahrzeug 3 aufgrund der fahrdynamischen Bedingungen auch ohne zusätzlichen Lenkeingriff in der Fahrspur 2 bleibt. Für die Erfindung ist es daher wichtig zu erkennen, ob das Fahrzeug 3 eine Kurve befährt und welche Position es in Bezug auf die Ränder der Fahrspur 2 (Fahrspurmarkierungen 2.1, 2.2) einnimmt. Die Position des Fahrzeugs 3 in Bezug auf die Ränder der Fahrspur 2 lässt sich mit dem Videosensor 23 des Fahrerassistenzsystems 20, 30 erfassen, der schon die Fahrspurmarkierungen 2.1, 2.2 der Fahrspur 2 und die Position des Fahrzeugs 3 in Bezug auf die Fahrspur 2 erfasst. Eine Kurvenfahrt wird auf einfache Weise mittels eines Sensors 31 erfasst, der für die Querbeschleunigung des Fahrzeugs 3 empfindlich ist. In einer alternativen Ausführungsvariante der Erfindung kann ein Kurvenverlauf auch anhand der Fahrspurmarkierungen 2.1, 2.2 erfasst werden. Falls das Fahrzeug 3 mit einem Navigationssystem 32 ausgestattet ist, kann ein Kurvenverlauf auch anhand der gespeicherten Geodaten über die Straßenführung erkannt werden.

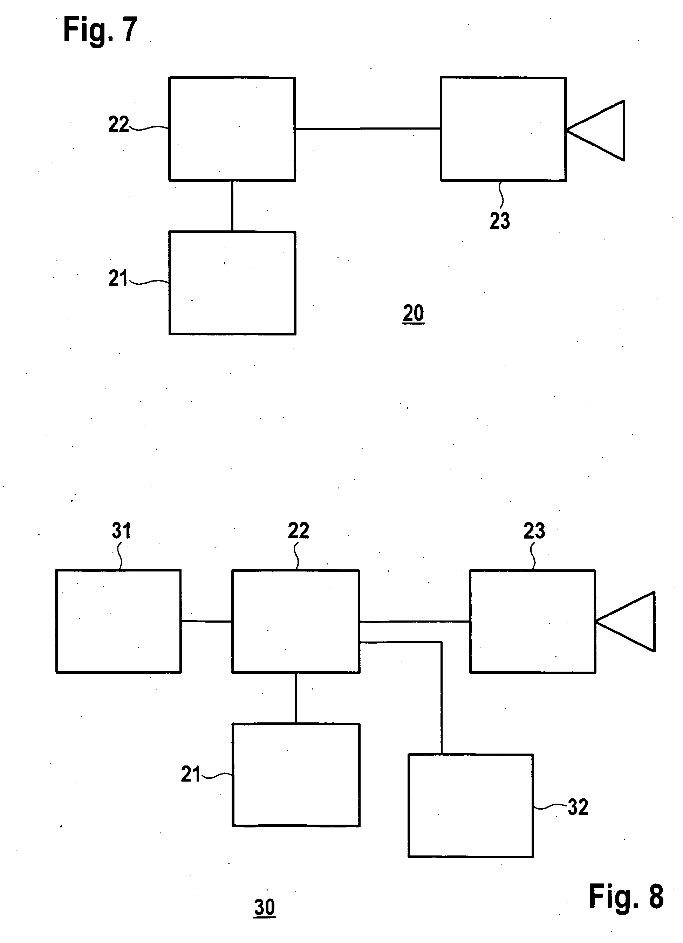

Figur 7 zeigt ein vereinfachtes Blockschaltbild mit wesentlichen Komponenten eines Fahrerassistenzsystems. 20. Das Fahrerassistenzsystem 20 umfasst wenigstens einen Videosensor 23, beispielsweise eine CCD- oder eine CMOS-Kamera, die mit einem Steuergerät 22 verbunden ist. Das Steuergerät ist mit dem Lenksystem des Fahrzeugs 3 verbunden. Der Videosensor 23 erfasst die Fahrspurmarkierungen 2.1, 2.2 (siehe Figuren 1 bis 6), und, ggf. in Verbindung mit weiteren Sensoren, wie beispielsweise die Fahrbahn abtastenden Infrarotsensoren, die Position des Fahrzeugs 3 auf der Fahrspur, insbesondere die Position des Fahrzeugs 3 in Bezug auf die Fahrspurmarkierungen 2.1 und 2.2. Die Signale der Sensoren werden von der Steuerungseinrichtung 22 verarbeitet. Bei einem drohenden Abweichen des Fahrzeugs 3 von seiner Solltrajektorie auf der Fahrspur 2 greift die Steuerungseinrichtung 22 in das Lenksystem 21 des Fahrzeugs 3 ein, um das Fahrzeug auf der Solltrajektorie zu halten. Figur 8 zeigt wiederum wesentliche Komponenten eines Fahrerassistenzsystems 30, bei dem zusätzlich ein Sensor 31 für die Erfassung der Querbeschleunigung des Fahrzeugs 3 vorgesehen ist. Der Sensor 31 dient zur Feststellung einer Kurvenfahrt. Eine Kurvenfahrt kann weiterhin mittels der in einem Navigationssystem 32 gespeicherten Geodaten erkannt werden.

## Patentansprüche

1. Fahrerassistenzsystem (20,30) mit einer Spurhaltefunktion, umfassend eine Einrichtung für die Erkennung der Fahrspuren (2) auf der Fahrbahn, eine Steuereinrichtung (22) für den Eingriff in das Lenksystem (21) des Fahrzeugs (3) im Sinne einer Spurhaltung, **wobei** Mittel vorgesehen sind, um die Position des Fahrzeugs (3) in Bezug auf die Ränder der Fahrspur (2) zu erfassen, dass weiterhin Mittel vorgesehen sind, um eine Kurvenfahrt des Fahrzeugs (3) zu erfassen, und dass die Steuerungseinrichtung (22) ihre Steuerungsfunktion in Abhängigkeit von der Position des Fahrzeugs (3) auf der Fahrspur (2) und in Abhängigkeit von einer Kurvenfahrt ausübt, **dadurch gekennzeichnet, dass** einerseits das Fahrerassistenzsystem bei einer Annäherung an eine Außenkurve um so stärker in die Lenkung eingreift, je enger die Kurve ist oder je schneller die Kurve durchfahren wird oder andererseits das Fahrerassistenzsystem bei einer Annäherung an die kurveninnere Fahrspurmarkierung um so schwächer eingreift, je schneller das Fahrzeug fährt oder je enger die durchfahrene Kurve ist.

2. Fahrerassistenzsystem (20, 30) nach Anspruch 1, **dadurch gekennzeichnet, dass** Mittel für die Erfassung der Querbeschleunigung des Fahrzeugs (3) vorgesehen sind und dass die Steuerungseinrichtung (22) ihre Steuerungsfunktion in Abhängigkeit von der Position des Fahrzeugs (3) auf der Fahrspur (2) und in Abhängigkeit von der erfassten Querbeschleunigung des Fahrzeugs (3) ausübt.

3. Fahrerassistenzsystem (20, 30) nach einem der vorhergehenden Ansprüche, **dadurch gekennzeichnet, dass** die Steuerungseinrichtung (22) ihre Steuerungsfunktion in Abhängigkeit von der Position des Fahrzeugs (3) auf der Fahrspur (2) und in Abhängigkeit von Daten eines Navigationssystems (32) ausübt.

4. Fahrerassistenzsystem (20, 30) nach einem der vorhergehenden Ansprüche, **dadurch gekennzeichnet, dass** bei Befahren einer kurvigen Fahrspur (2) mit Position des Fahrzeugs (3) in dem kurvenäußeren Bereich der Fahrspur und unterhalb eines Schwellwerts der Querbeschleunigung bei einem Abweichen des Fahrzeugs von der Solltrajektorie ein mittelstarker Eingriff in das Lenksystem (21) des Fahrzeugs (3) mit dem Ziel der Spureinhaltung erfolgt.

5. Fahrerassistenzsystem (20,30) nach einem der vorhergehenden Ansprüche, **dadurch gekennzeichnet, dass** bei Befahren einer kurvigen Fahrspur mit Position des Fahrzeugs (3) in dem kurvenäußeren Bereich der Fahrspur (2) und oberhalb eines Schwellwerts der Querbeschleunigung bei einem Abweichen des Fahrzeugs (3) von der Solltrajektorie ein starker Eingriff in das Lenksystem (21) des Fahrzeugs (3) mit dem Ziel der Spureinhaltung erfolgt.

6. Fahrerassistenzsystem (20,30) nach einem der vorhergehenden Ansprüche, **dadurch gekennzeichnet, dass** bei Befahren einer kurvigen Fahrspur (2) mit Position des Fahrzeugs (3) in dem kurveninneren Bereich der Fahrspur (2) und unterhalb eines Schwellwerts der Querbeschleunigung bei einem Abweichen des Fahrzeugs (3) von der Solltrajektorie ein schwacher Eingriff in das Lenksystem (21) des Fahrzeugs (3) mit dem Ziel der Spureinhaltung erfolgt.

7. Fahrerassistenzsystem (20,30) nach einem der vorhergehenden Ansprüche, **dadurch gekennzeichnet, dass** bei Befahren einer kurvigen Fahrspur mit Position des Fahrzeugs (3) in dem kurveninneren Bereich der Fahrspur (2) und oberhalb eines Schwellwerts der Querbeschleunigung bei einem Abweichen des Fahrzeugs (3) von der Solltrajektorie kein Eingriff in das Lenksystem (21) des Fahrzeugs (3) mit dem Ziel der Spureinhaltung erfolgt.

8. Fahrerassistenzsystem (20,30) nach einem der vorhergehenden Ansprüche, **dadurch gekennzeichnet, dass** bei Befahren einer im Wesentlichen ohne Krümmung verlaufenden Fahrspur (2) bei einem Abweichen des Fahrzeugs (3) von der Solltrajektorie ein schwacher Eingriff in das Lenksystem (21) des Fahrzeugs (3) mit dem Ziel der Spureinhaltung erfolgt.

## Claims

1. Driver assistance system (20, 30) having a lane-keeping function, comprising a device for detecting the lanes (2) on the carriageway, a control device (22) for intervening in the steering system (21) of the vehicle (3) with the effect of performing lane-keeping, wherein means are provided for sensing the position of the vehicle (3) with respect to the edges of the lane (2), in that means are also provided for sensing cornering of the vehicle (3), and in that the control device (22) carries out its control function in accordance with the position of the vehicle (3) on the lane (2) and in accordance with cornering, **characterized in that**, on the one hand, when the vehicle (3) approaches an outside bend, the driver assistance system intervenes more strongly in the steering the tighter the bend or the higher the speed at which the bend is being travelled through or, on the other hand, when the vehicle (3) approaches the lane marking on the inside of a bend, the driver assistance system intervenes more weakly the higher the speed at which the vehicle is travelling or the tighter the bend being travelled through.

2. Driver assistance system (20, 30) according to Claim 1, **characterized in that** means are provided for sensing the lateral acceleration of the vehicle (3), and **in that** the control device (22) carries out its control function in accordance with the position of the vehicle (3) on the lane (2) and in accordance with the sensed lateral acceleration of the vehicle (3).

3. Driver assistance system (20, 30) according to one of the preceding claims, **characterized in that** the control device (22) carries out its control function in accordance with the position of the vehicle (3) on the lane (2) and in accordance with data of a navigation system (32).

4. Driver assistance system (20, 30) according to one of the preceding claims, **characterized in that**, when the vehicle (3) is travelling along a lane (2) with bends with the vehicle (3) positioned in the region on the outside of the bend on the lane and travelling below a threshold value of the lateral acceleration and the vehicle deviates from the setpoint trajectory, a medium intervention is made in the steering system (21) of the vehicle (3) with the objective of keeping in the lane.

5. Driver assistance system (20, 30) according to one of the preceding claims, **characterized in that**, when the vehicle (3) is travelling along a lane with bends with the vehicle (3) positioned in the region on the outside of the bend on the lane (2) and travelling above a threshold value of the lateral acceleration and the vehicle (3) deviates from the setpoint trajectory, a strong intervention is made in the steering system (21) of the vehicle (3) with the objective of keeping in the lane.

6. Driver assistance system (20, 30) according to one of the preceding claims, **characterized in that**, when the vehicle (3) is travelling along a lane (2) with bends with the vehicle (3) positioned in the region on the inside of the bend on the lane (2) and travelling below a threshold value of the lateral acceleration and the vehicle (3) deviates from the setpoint trajectory, a weak intervention is made in the steering system (21) of the vehicle (3) with the objective of keeping in the lane.

7. Driver assistance system (20, 30) according to one of the preceding claims, **characterized in that**, when the vehicle (3) is travelling along a lane with bends with the vehicle (3) positioned in the region on the inside of the bend on the lane (2) and travelling above a threshold value of the lateral acceleration and the vehicle (3) deviates from the setpoint trajectory, no intervention is made in the steering system (21) of the vehicle (3) with the objective of keeping in the lane.

8. Driver assistance system (20, 30) according to one of the preceding claims, **characterized in that**, when the vehicle (3) is travelling along a lane (2) which has a course essentially without curvature and the vehicle (3) deviates from the setpoint trajectory, a weak intervention is made in the steering system (21) of the vehicle (3) with the objective of keeping in the lane.

## Revendications

1. Système (20, 30) d'assistance au conducteur doté d'une fonction de maintien sur la bande de circulation,
comprenant un dispositif de détection des bandes de circulation (2) présentes sur la chaussée, un dispositif de commande (22) qui intervient dans le système de direction (21) du véhicule (3) pour le maintenir sur sa bande de circulation,
des moyens étant prévus pour détecter la position du véhicule (3) par rapport aux bords de la bande de circulation (2),
des moyens étant en outre prévus pour détecter si le véhicule (3) se déplace dans une courbe,
le dispositif de commande (22) exerçant sa fonction de commande en fonction de la position du véhicule (3) sur la bande de circulation (2) et en fonction d'un déplacement sur une courbe,
**caractérisé en ce que**
d'une part, lorsque le véhicule s'approche d'une courbe extérieure, le système d'assistance au conducteur intervient d'autant plus fortement sur la direction que la courbe est plus serrée ou que la courbe est traversée plus rapidement et
d'autre part, lorsque le véhicule s'approche des repères de bande de circulation situés à l'intérieur de la courbe, le système d'assistance au conducteur intervient d'autant plus fortement que le véhicule se déplace plus rapidement ou que la courbe traversée est plus serrée.

2. Système (20, 30) d'assistance au conducteur selon la revendication 1, **caractérisé en ce qu'**il présente des moyens de détection de l'accélération transversale du véhicule (3) et **en ce que** le dispositif de commande (22) exerce sa fonction de commande en fonction de la position du véhicule (3) sur la bande de circulation (2) et en fonction de l'accélération transversale du véhicule (3) qu'il a détectée.

3. Système (20, 30) d'assistance au conducteur selon l'une des revendications précédentes, **caractérisé en ce que** le dispositif de commande (22) exerce sa fonction de commande en fonction de la position du véhicule (3) sur la bande de circulation (2) et en fonction des données d'un système de navigation (32).

4. Système (20, 30) d'assistance au conducteur selon l'une des revendications précédentes, **caractérisé en ce que** lorsque le véhicule se déplace sur une bande de circulation (2) en courbe, le véhicule (3) étant situé dans la partie extérieure de la courbe de la bande de circulation et en dessous d'une valeur de seuil de l'accélération transversale, lorsque le véhicule s'écarte de la trajectoire de consigne, une intervention de force moyenne est réalisée sur le système de direction (21) du véhicule (3) pour le maintenir sur la bande de circulation.

5. Système (20, 30) d'assistance au conducteur selon l'une des revendications précédentes, **caractérisé en ce que** lorsque le véhicule se déplace sur une bande de circulation en courbe, le véhicule (3) étant situé dans la partie extérieure de la courbe de la bande de circulation (2) et au-dessus d'une valeur de seuil de l'accélération transversale, lorsque le véhicule (3) s'écarte de la trajectoire de consigne, une intervention de force plus élevée est réalisée sur le système de direction (21) du véhicule (3) pour le maintenir sur la bande de circulation.

6. Système (20, 30) d'assistance au conducteur selon l'une des revendications précédentes, **caractérisé en ce que** lorsque le véhicule se déplace sur une bande de circulation (2) en courbe, le véhicule (3) étant situé dans la partie extérieure de la courbe de la bande de circulation (2) et en dessous d'une valeur de seuil de l'accélération transversale, lorsque le véhicule (3) s'écarte de la trajectoire de consigne, une intervention de force plus basse est réalisée sur le système de direction (21) du véhicule (3) pour le maintenir sur la bande de circulation.

7. Système (20, 30) d'assistance au conducteur selon l'une des revendications précédentes, **caractérisé en ce que** lorsque le véhicule se déplace sur une bande de circulation en courbe, le véhicule (3) étant situé dans la partie extérieure de la courbe de la bande de circulation (2) et au-dessus d'une valeur de seuil de l'accélération transversale, lorsque le véhicule (3) s'écarte de la trajectoire de consigne, aucune intervention n'est réalisée sur le système de direction (21) du véhicule (3) pour le maintenir sur la bande de circulation.

8. Système (20, 30) d'assistance au conducteur selon l'une des revendications précédentes, **caractérisé en ce que** lorsque le véhicule se déplace sur une bande de circulation (2) qui ne présente essentiellement aucune courbe, si le véhicule (3) s'écarte de la trajectoire de consigne, une intervention de force plus basse est réalisée sur le système de direction (21) du véhicule (3) pour le maintenir sur la bande de circulation.
